# EUROPEAN PATENT APPLICATION

(11) **EP 2 706 811 A1**
(43) Date of publication of application: **12.03.2014**
(21) Application number: 12290293.5
(22) Date of filing: 06.09.2012
(51) Int. Cl.: H04W 76/02

(54) **Method of operating a terminal of a communications network and terminal of a communications network**

(71) Applicant: Alcatel Lucent, 75007 Paris (FR)
(72) Inventor: WIld, Thorsten, 70435 Stuttgart (DE); Fonseca Dos Santos, Andre, 70197 Stuttgart (DE)
(74) Representative: DREISS Patentanwälte PartG mbB

(57) **Abstract**

The invention relates to a method of operating a terminal (10a) of a communications network (1000), wherein said terminal (10a) is served by a base station (100) of said communications network (1000) by means of a primary radio communications technology (r1), wherein said terminal (10a) is capable of using a secondary radio communications technology (r2), which is different from said primary radio communications technology (r1), wherein said terminal (10a) uses said secondary radio communications technology (r2) to determine (200) at least one parameter related to said secondary radio communications technology (r2), and wherein said terminal (10a) forwards (210) information depending on said parameter related to said secondary radio communications technology (r2) to said base station (100), preferably by using said primary radio communications technology (r1).

## Description

### Field of the invention

The present invention relates to a method of operating a terminal of a communications network, wherein said terminal is served by a base station of said communications network by means of a primary radio communications technology. The present invention also relates to a terminal of a communications network. The present invention further relates to a method of operating a base station of a communications network, wherein said base station is configured to use a primary radio communications technology for serving at least one terminal of said communications network, and to a base station of a communications network. Still further, the invention relates to a method of operating a communications network and to a communications network.

For example, the primary radio communications technology may be based on communications standards for cellular communications networks such as e.g. GSM (Global System for Mobile Communications ), UMTS (Universal Mobile Telecommunications System), LTE (Long Term Evolution), LTE-Advanced.

### Background

It is an object of the present invention to provide improved methods and devices of the above mentioned type to facilitate device to device ("D2D") communication, especially between terminals of a communications network thus enabling local content distribution and off-loading.

### Summary

Regarding the method of operating a terminal of a communications network, according to the present invention this object is achieved in that said terminal is capable of using a secondary radio communications technology, which is different from said primary radio communications technology, wherein said terminal uses said secondary radio communications technology to determine at least one parameter related to said secondary radio communications technology, and wherein said terminal forwards information depending on said parameter related to said secondary radio communications technology to said base station, preferably by using said primary radio communications technology. This advantageously enables the base station to collect information on the parameter related to said secondary radio communications technology, preferably for a plurality of terminals. Based on the collected information, potential neighborship relations between several devices may be derived.

For example, if the terminal according to the embodiments determines said parameter related to said secondary radio communications technology for a plurality of further devices, from these parameters the existence of said further devices and e.g. a quality of a radio channel between the respective further device and the terminal according to the embodiments may be assessed. This information may be forwarded to the base station that can collect the parameter-related information.

If the base station serves several terminals that operate according to the embodiments, the base station may collect a correspondingly large amount of information on said further devices and their communication capabilities with respect to the several terminals. Thus, a sophisticated database may be constructed by the base station which inter alia reflects neighborship relations of said terminals and said further devices and the like. Such database may be used to facilitate initiation of D2D (device to device) communications between several terminals or the further devices.

Generally, device to device (D2D) communications assisted by communications networks, particularly cellular networks, is a potential candidate technology for evolutions of 4G (fourth generation) wireless and 5G (fifth generation) systems. Some examples of potential D2D network assisted communications are: local content distribution (i.e., direct data exchange between e.g. two terminals of a cellular communications network) and off-loading the cellular system. In order to enable D2D in a network assisted controlled-manner, the network, or its base stations, respectively, first has to be aware of the neighborhood relations between devices (e.g. mobile stations (MS) or terminals). Thus, some form of "peer discovery" has to be provided taking into consideration associated knowledge on radio channel conditions between the D2D candidates.

The terminal according to the embodiments advantageously facilitates such "peer discovery" or determination of neighborhood relations between devices that may potentially communicate via D2D mechanisms, because it provides the base station with respective information. Advantageously, since the terminal according to the embodiments uses said secondary radio communications technology to determine at least one parameter related to said secondary radio communications technology, resources of the primary radio communications technology, i.e. a cellular network according to the LTE-Advanced standard, are saved for regular cellular communications.

The approach according to the embodiments is superior to other approaches, which e.g. rely on the usage of location information, thus using GPS (global positioning system) / assisted GPS or triangulation-like methods etc. A drawback of the GPS approach is that the geometrical location - which can be determined using GPS - does not give a precise mapping to actual radio conditions, which is due to multipath propagation, reflections/refraction at obstacles and the like. Another drawback of the GPS approach is that GPS service may simply not be available - not all devices are equipped with GPS receivers and e.g. for in-building devices, GPS coverage might not be available.

In contrast to the GPS approach, the approach according to the embodiments, which employs the secondary radio communications technology offered by a terminal, a precise assessment of radio propagation effects and the like may be performed, which is not available with systems relying on GPS.

A further approach for the abovementioned "peer discovery" is beaconing by employing the primary radio communications technology provided by the terminals and further devices, i.e. by employing the LTE-Advanced enabled radio communications of these devices. Here, the devices transmit a beacon signal within their radio access network band, controlled by the base station. Devices listen to the beacon signal and extract information, like channel / signal power estimates and IDs of neighboured devices.

The decisive drawback of beaconing by employing the primary radio communications technology is that scarce radio resources of the radio access network according to the primary radio communications technology are consumed as overhead of neighbourhood detection. Another disadvantage is, that a device has potentially to deal with multiple incoming beaconing signals which is a multiuser channel estimation problem requiring computational complexity at the device. The necessary processing power might not be available.

Thus, the approach according to the embodiments, which is based on employing a secondary radio communications technology, which is different from the primary radio communications technology, is particularly beneficial in that radio resources of the primary radio communications technology are saved while at the same time enabling precise radio channel measurements, which is not possible with GPS-based solutions.

According to an embodiment, said communications network comprising the base station and the terminal is a cellular communications network, wherein said primary radio communications technology is based on the LTE or LTE-Advanced or UMTS or GSM standard or based on another communications standard for cellular communications, and wherein said secondary radio communications standard is based on a standard of the IEEE-802.11 standard family, for example based on WLAN (wireless local area network) according to the IEEE (Institute of Electrical and Electronics Engineers) 802.11n standard.

While WLAN is preferred for forming the secondary radio communications standard in the sense of the embodiments, any other radio communications technology being different from said primary radio communications technology may also be used, for example Bluetooth or the like. For the further description, LTE or LTE-Advanced is exemplarily referred to as said primary radio communications technology, and WLAN is exemplarily referred to as said secondary radio communications technology.

Thus, for example, according to an embodiment, an LTE terminal served by an LTE base station may be employed for a "peer discovery" procedure aiming at enabling D2D communications. If the LTE terminal also provides WLAN capabilities, e.g. according to IEEE 802.11n, its WLAN capabilities, which represent the secondary radio communications standard according to the embodiments, may be used for collecting data regarding neighborship information, radio channels between the neighboring devices, and the like.

According to a further embodiment, said step of determining said parameter comprises at least one of: detecting a presence of a further device capable of communication via said secondary radio communications technology, determining a quality and/or other parameters of a radio channel between said terminal and said further device, determining a receive signal power level of a signal received from said further device by using said secondary radio communications technology, determining a service set identifier, SSID, associated with said further device.

I.e., the terminal according to the embodiments may use its WLAN functionality to detect the presence of a further device capable of communication via said secondary radio communications technology. Preferably, such further devices may comprise other LTE terminals that are also WLAN enabled, such other LTE terminals constituting candidates for future D2D communications that may be supported by the LTE network.

The further devices that may be detected in the course of the method according to the present embodiment may also comprise other WLAN-enabled devices, i.e. which do not represent LTE terminals or devices capable of using the primary radio communications technology. Such devices may e.g. comprise fixed WLAN hotspots or the like. Data collected with respect to such devices may also be forwarded by the terminal according to the embodiments.

Advantageously, the terminal according to the embodiments may also use its WLAN functionality to determine a quality and/or other parameters of a radio channel (statistical parameters describing fading and the like) between said terminal and said further device. This is particularly advantageous since devices that e.g. have good receive power conditions with respect to an access point in the secondary radio technology domain (here: WLAN) are likely to have useful channel qualities for D2D communication using the primary radio technology (here: LTE-Advanced), too, as the radio frequencies of both systems (LTE-Advanced, 802.11n WLAN) are not very different and thus provide rather similar shadowing and path loss properties affecting the radio channel quality. In other words, if the terminal according to the embodiments detects by means of its WLAN interface a further device that exhibits a good WLAN radio channel with the terminal, such information may also be forwarded to the base station by the terminal. Since the frequency ranges of WLAN and LTE-Advanced are similar, the base station may conclude from such information that a radio channel established via the primary radio technology between said terminal and said further device is also rather good.

Thus, by means of forwarding the information from the terminal to the base station, the base station can collect neighborship information from the secondary wireless network and e.g. build a weighted graph that represents radio channel qualities or other neighborship-related information between several terminals and/or further devices.

Thus, by using the WLAN interface of several LTE terminals, and by the terminals' forwarding of collected respective data, the LTE base station may asses radio channel conditions of the WLAN connections between the LTE terminals and may use this information to derive radio channel information related to potential (D2D) LTE-Advanced transmissions between these devices.

Apart from device detection and radio channel assessment, it is also possible for the terminal by means of its WLAN interface to determine a receive signal power level of a signal received from said further device, whereby the radio channel related information may be more precisely defined and/or a distance between the devices may be estimated.

Further, when using WLAN as said secondary radio communications technology, determining a service set identifier, SSID, associated with said further device is also possible. I.e., the terminal according to the embodiments may detect other WLAN devices around its position.and may determine and record their SSIDs (if broadcasted), which may also be forwarded to the base station.

According to a further embodiment, said terminal performs said steps of determining and/or forwarding a) upon request of a further device, particularly said base station, b) on its own initiative, c) periodically, d) if its interface for said primary radio communications technology is idle.

According to a further embodiment, said terminal transmits, by using said secondary radio communications technology, a beacon signal, wherein said beacon signal particularly comprises a network name and/or a service set identifier, SSID, and/or further information on said terminal and/or its communications capabilities provided via said secondary radio communications technology. This enables further terminals according to the embodiments to detect said terminal and to forward corresponding information (e.g., the information that has been included in the beacon signal) to their base station. The beacon signal may e.g. be realised by said terminal operating as an access point regarding said secondary radio communications technology, i.e. as a WLAN access point, so that further terminals according to the embodiments may detect its presence and may determine communication parameters associated with said WLAN access point or the secondary radio communications technology in general.

A further solution to the object of the present invention is given by a terminal according to claim 6. The terminal according to the embodiments is advantageously enabled to perform the method according to the embodiments.

For example, a conventional LTE-capable mobile phone or "Smartphone" also having WLAN functionality may be enhanced by being configured to perform the method according to the embodiments to obtain a terminal according to the embodiments.

A further solution to the object of the present invention is given by a method of operating a base station of a communications network, wherein said base station is configured to use a primary radio communications technology for serving at least one terminal of said communications network, preferably a terminal according to the embodiments, wherein said at least one terminal is capable of using a secondary radio communications technology, which is different from said primary radio communications technology, and wherein the base station receives information depending on at least one a parameter related to said secondary radio communications technology from said terminal.

Preferably, the base station receives said information depending on at least one a parameter related to said secondary radio communications technology from said terminal via a communications channel enabled by the primary radio communications technology, e.g. an LTE uplink transmission or the like.

According to a further embodiment, said base station requests said terminal to initiate a determination of said at least one parameter related to said secondary radio communications technology and/or to initiate forwarding information depending on said parameter related to said secondary radio communications technology to said base station. Thus, the base station may control the data collection by means of the secondary radio communications technology (e.g., WLAN) performed by the terminal. This way, the base station may e.g. trigger a plurality or all of its currently served terminals capable of WLAN communications to perform determination of the parameter(s) related to the secondary radio communications technology. I.e., upon request of the base station, the terminals according to the embodiments may start their WLAN-based data collection, for example in the sense of neighbour device detection, radio channel determination and the like.

Upon receiving the respective information from the terminals, the base station may build a database or a graph representing the involved terminals and classifying them as potential candidates for a future D2D communication controlled by the base station.

According to a further embodiment, said base station requests said terminal to transmit, by using said secondary radio communications technology, a beacon signal, said beacon signal particularly comprising a network name and/or a service set identifier, SSID, and/or further information on said terminal and/or its communications capabilities provided via said secondary radio communications technology.

According to a further embodiment, said base station assigns beaconing information to said terminal and notifies said terminal to transmit said beacon signal depending on said beaconing information. This way, the base station may e.g. specify a certain SSID to be used by a terminal for generating its beacon signal so that other terminals that may detect the respective WLAN will detect a WLAN with an SSID known by the base station. In the alternative, a terminal sending a beacon signal, e.g. by WLAN, may use an SSID chosen by itself. The terminal may signal its SSID to the base station e.g. by using the primary radio communications technology.

According to a further embodiment, said base station collects information depending on at least one a parameter related to said secondary radio communications technology from a plurality of terminals.

A further solution to the object of the present invention is given by a base station according to claim 13. The base station according to the embodiments is advantageously enabled to perform the method of operating a base station according to the embodiments.

Further solutions to the object of the present invention are given by a method of operating a communications network according to claim 15 and a communications network according to claim 16.

### Brief description of the figures

Further features, aspects and advantages of the present invention are given in the following detailed description with reference to the drawings in which:
- Figure 1: schematically depicts a communications network according to an embodiment,
- Figure 2a: depicts a simplified flow-chart of a method of operating a terminal according to an embodiment,
- Figure 2b: depicts a simplified flow-chart of a method of operating a base station according to an embodiment,
- Figure 3: schematically depicts a communications network according to an embodiment, and
- Figure 4: schematically depicts a communications network according to a further embodiment.

### Description of the embodiments

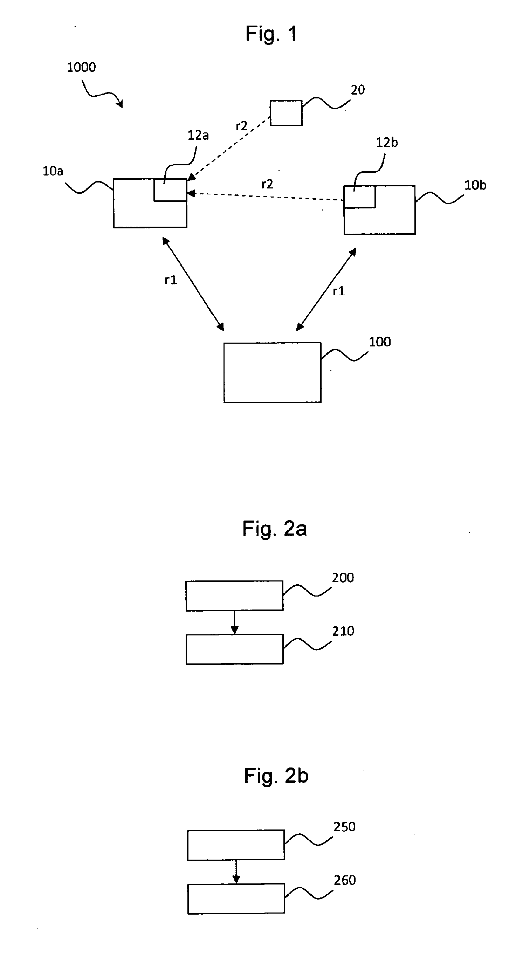

Figure 1 schematically depicts a communications network 1000 according to an embodiment. The network 1000 may e.g. operate according to the LTE-Advanced standard and comprises a base station 100 that is correspondingly configured to use the LTE-Advanced standard as a primary radio communications technology for serving at least one LTE-Advanced enabled terminal 10a of said communications network 1000. A further terminal 10b, which is also served by the base station 100, is also depicted by Figure 1.

The terminals 10a, 10b communicate with the base station via said primary radio communications technology (here: LTE-Advanced), which is indicated in Figure 1 by the double arrows r1 between the devices 10a, 100 and 10b, 100.

Moreover, the terminal 10a is equipped with WLAN functionality 12a according to the IEEE 802.11n standard, which is used as a secondary radio communications technology in the context of the embodiments, e.g. a WLAN transceiver. That is, apart from being capable of LTE-Advanced communications r1 with the base station 100, the terminal 10a may also establish WLAN communications with other WLAN devices.

For instance, the second terminal 10b also comprises a WLAN transceiver 12b. The terminals 10a, 10b may e.g. be implemented in the form of so-called "smartphones", i.e. mobile telephones, having both LTE-Advanced and WLAN compatibility, and may be extended by the functionality according to the embodiments.

A further device 20, which does not comprise LTE-Advanced functionality, but which is capable of WLAN communications, is also depicted. The device 20 may e.g. represent a WLAN access point and may as such not belong to the communications network 1000. However, said WLAN device 20 may also be taken into consideration according to an embodiment explained in detail below.

According to a preferred embodiment, the terminal 10a is configured to use said secondary radio communications technology, presently WLAN, i.e. by means of its WLAN transceiver 12a, to determine at least one parameter related to said secondary radio communications technology, i.e. possible WLAN networks and their operational parameters, in the neighborhood of the terminal 12a.

Further according to a preferred embodiment, said terminal 10a is configured to forward information depending on said parameter related to said secondary radio communications technology to said base station 100, preferably by using the primary radio communications technology r1.

Thus, neighboring WLAN devices 10b, 20 may be detected by the terminal 10a, and the respective properties of the WLAN signals r2 transmitted by these devices 10b, 20 may be evaluated by the terminal 10a and forwarded to the base station 100, which may collect this data to build a database comprising neighborship information of the devices 10a, 10b, 20 as far as the WLAN signals r2 are concerned. From this information, the base station 100 may further determine which of the devices 10a, 10b, 20 are e.g. sufficiently close together to be suitable candidates for a device to device (D2D) communication, i.e. using the LTE-Advanced techniques of the network 1000 for direct inter-device communications.

Advantageously, since terminal 10a evaluates secondary radio technology signals r2 (here: WLAN), the LTE-Advanced transmission resources are not required for these purposes and are available for regular network operation of the network 1000.

However, since radio propagation properties of WLAN signals and LTE-Advanced signals are similar to some degree, from the collected WLAN signal information the base station 100 may determine potential radio propagation properties of LTE-Advanced transmissions between the devices 10a, 10b.

Figure 2a depicts a simplified flow-chart of a method of operating the terminal 10a (Figure 1) according to an embodiment. In step 200, the terminal determines said at least one parameter related to said secondary radio communications technology r2, i.e. WLAN in the present example. In a subsequent step 210, said terminal 10a forwards information depending on said parameter related to said secondary radio communications technology r2 to said base station 100, preferably by using said primary radio communications technology r1.

According to a further embodiment, said step of determining 200 said parameter comprises at least one of: detecting a presence of a further device 10b, 20 capable of communication via said secondary radio communications technology.

Once a further WLAN device 10b, 20 has been detected by the terminal 10a a quality and/or other parameters of a radio channel r2 between said terminal 10a and said further devices 10b, 20 may be determined.

Alternatively or additionally, in step 200, a receive signal power level of a signal r2 received from said further devices 10b, 20 may be determined by using said secondary radio communications technology.

According to a further embodiment, a service set identifier, SSID, associated with said further device 12b, 20 or the WLAN signal/network provided thereby may be determined.

The data so determined in step 200 (Figure 2a) may be forwarded 210 by the terminal 10a to the base station 100 for collection and further evaluation.

Thus, according to one aspect, the terminal 10a according to the embodiments may use its WLAN functionality 12a to detect the presence of a further device 10b, 20 capable of communication via said secondary radio communications technology (WLAN), and to notify the base station of such information and the above explained detail parameters of the respective WLAN signals r2. From this information, the base station 100 may derive whether said devices 10a, 10b are suitable candidates for future D2D communications that may be supported by the LTE-Advanced network 1000.

However, e.g. if the information collected by the base station 100 results in a poor radio channel r2 between the devices 10a, 10b, the base station may conclude that these devices 10a, 10b, at least at their present position, are no suitable candidates for D2D communications.

As already outlined above, the further devices that may be detected in the course of the method according to the embodiments may also comprise other WLAN-enabled devices 20, i.e. which do not represent LTE terminals 10a, 10b or devices capable of using the primary radio communications technology r1. Such devices 20 may e.g. comprise fixed WLAN hotspots or the like. Data collected with respect to such devices may also be forwarded by the terminal 10a according to the embodiments.

Advantageously, the further LTE terminal 10b is also configured to perform the method according to the embodiments explained above. Thus, base station 100 may receive from a plurality of terminals 10a, 10b respective parameters and information related to the WLAN characteristics between said devices 10a, 10b.

Thus, by using the WLAN interface 12a, 12b of several LTE terminals 10a, 10b, and by the terminals' forwarding of collected respective data, the LTE base station 100 may asses radio channel conditions of the WLAN connections r2 between the LTE terminals 10a, 10b and may use this information to derive radio channel information related to potential (D2D) LTE-Advanced transmissions between these devices.

Apart from device detection and radio channel assessment, it is also possible for the terminal 10a by means of its WLAN interface 12a to determine a receive signal power level of a signal r2 received from said further device 10b, 20, whereby the radio channel related information may be more precisely defined and/or a distance between the devices 10a and 10b, 20 may be estimated.

Further, when using WLAN as said secondary radio communications technology, determining a service set identifier, SSID, associated with said further device 10b, 20 is also possible. I.e., the terminal 10a according to the embodiments may detect other WLAN devices 10b, 20 around its position and may determine and record their SSIDs (if broadcasted), which may also be forwarded to the base station 100.

According to a further embodiment, said terminal 10a performs said steps of determining 200 (Figure 2a) and/or forwarding 210 a) upon request of a further device, particularly said base station 100, b) on its own initiative, c) periodically, d) if its interface for said primary radio communications technology r1 is idle.

According to a further embodiment, said terminal 10a transmits, by using said secondary radio communications technology r2, a beacon signal, wherein said beacon signal particularly comprises a network name and/or a service set identifier, SSID, and/or further information on said terminal 10a and/or its communications capabilities provided via said secondary radio communications technology r2. This enables further terminals 10b according to the embodiments to detect said terminal 10a and to forward corresponding information (e.g., the information that has been included in the beacon signal) to their base station 100.

For example, when the first terminal 10a is performing the method according to Figure 2a, it is preferred that the further terminal 10b sends a beacon signal as mentioned above, so that the first terminal 10a may detect the second terminal 10b and its WLAN signal. Preferably, the base station 100 may request terminal 10a to perform the method according to Figure 2a and may request the terminal 10b to send its WLAN beacon signal to enable detection at the first terminal 10a. Generally, the base station 100 may control the terminals to either enter the peer detection process e.g. according to Figure 2a or to transmit a beacon signal in a coordinated manner to enable to efficiently determine and collect WLAN related data from a plurality of terminals 10a, 10b, which helps to quickly establish e.g. a complete neighborship graph representing the mutual WLAN channel properties between the terminals.

Figure 2b depicts a simplified flow-chart of a method of operating a base station 100 (Figure 1) according to an embodiment.

In step 250 said base station 100 requests the terminal 10a to initiate a determination 200 (Figure 2a) of said at least one parameter related to said secondary radio communications technology r2 and/or to initiate forwarding 210 the information depending on said parameter related to said secondary radio communications technology r2 to said base station 100.

In the subsequent step 260 (Figure 2b), the base station 100 receives the information depending on at least one a parameter related to said secondary radio communications technology r2 from said terminal 10a.

According to a further preferred embodiment, the base station 100 (Figure 1) is a cellular infrastructure node of the primary radio access network (e.g. an evolution of LTE-A or 5G, having D2D capabilities), serving the terminals 10a, 10b. The terminal 10b may act as a WLAN access point by means of its WLAN transceiver 12b. In the case of terminal 10b being a smartphone, e.g. the so-called WLAN "tethering" functionality may be used.

According to a further embodiment, the SSID of the WLAN signal provided by the terminal 10b is known to the base station 100 (either defined via primary network r1 by the base station 100 using forward (i.e. downlink) control signalling, or by feedback from the terminal 10b). The terminal 10b may transmit a WLAN beaconing signal, while terminal 10a "listens", i.e. tries to detect any, secondary network access point beaconing signals, i.e. the WLAN beacon. The terminal 10a may measure the channel associated with said WLAN beacon signal r2 and may extract an SSID of terminal 10b. This information may be fed back to the base station 100 in step 210 of Figure 2a. Also, an estimate of a WLAN radio channel attenuation may be evaluated by the terminal 10a in the course of channel measuring, which may also be forwarded to the base station. After this, advantageously, the base station 100 has neighborship knowledge about devices 10a, 10b.

Since mainly the WLAN interfaces of the devices 10a, 10b have been used for attaining this neighborship knowledge (apart from forwarding the results to the base station using the primary network r1), the primary network resources are advantageously saved.

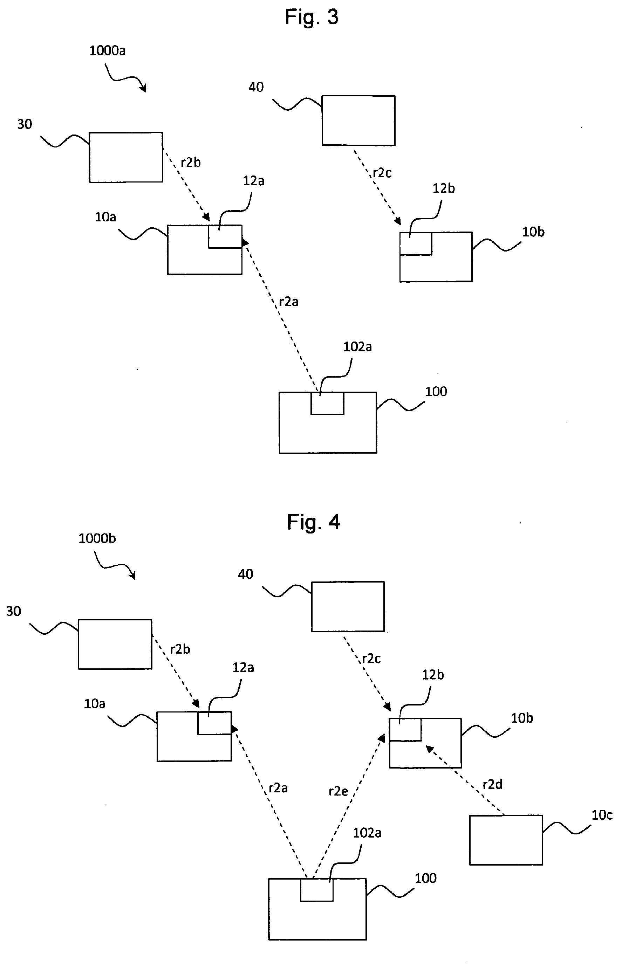

Figure 3 schematically depicts a communications network 1000a according to a further embodiment.

The network 1000a according to Fig. 3 comprises a base station 100, which represents a cellular infrastructure node of the network 1000a. In analogy to the embodiment of Fig. 1, the base station 100 of Figure 3 uses a primary radio communications technology r1 (Fig. 1) such as LTE-Advanced (also denoted as "LTE-A") or an evolution of LTE-A or 5G. By using said primary radio communications technology, the base station 100 may communicate with, i.e. serve, the terminals 10a, 10b, similar to the embodiment of Figure 1. However, the arrows r1 of Figure 1 depicting the communication links using said primary radio communications technology have been omitted in Figure 3 for the sake of clarity.

The devices 30, 40 represent access points of a secondary wireless network, which uses a secondary radio communications technology such as WLAN. Additionally, a further WLAN access point 102a may be co-located with the base station 100 or integrated therein, as depicted by Figure 3. Base station 100 may e.g. represent an Alcatel-Lucent "lightRadio" metro base station, which is extended by the functionality according to the embodiments.

According to an embodiment, the terminals 10a, 10b are served by the primary radio access network or its base station 100, by means of the primary radio communications technology. The terminals 10a, 10b may also be considered as candidates for device to device (D2D) communication.

According to a preferred embodiment, each of the WLAN access points 30, 40, 102a sends a respective beacon signal r2a, r2b, r2c using the secondary radio communications technology, the beacon signal comprising e.g. a WLAN SSID or further information related to the respective access point 30, 40, 102a. The terminals 10a, 10b listen to the beacon signals r2a, r2b, r2c of the secondary radio communications technology and forward to their base station 100 by means of the primary radio communications technology e.g. the detected access points IDs (their SSIDs) and the received signal power and/or further parameters associated with the secondary radio communications technology as determined by said terminals 10a, 10b. This advantageously allows the base station 100 to construct a neighborship graph of the devices 10a, 10b, 30, 40, 102a.

Figure 4 schematically depicts a communications network 1000b according to a further embodiment. This embodiment considers an operational scenario, wherein a third terminal 10c is outside the WLAN coverage as provided by the devices 30, 40, 102a, cf. the arrows r2a, r2b, r2c, r2e. I.e., the third terminal 10c does not receive any WLAN signal r2a, r2b, r2c, r2e from one of said devices 30, 40, 102a currently acting as WLAN access points.

According to an embodiment, said third terminal 10c may itself operate as an access point (WLAN interface of 10c is not depicted by Figure 4) thus sending a WLAN beacon signal r2d, which may have an ID, preferably an SSID, which is known to the base station 100 (the ID / SSID may have been defined before by control signalling via the primary radio communications technology network).

The third terminal 10c may e.g. be requested by the base station 100 to change from a detecting mode (e.g. according to Figure 2a) to a WLAN access point mode, once the base station 100 has evaluated that the third terminal 10c during its detecting mode did not receive any WLAN signal from other devices. Alternatively, the terminal 10c may also determine that it does not receive any WLAN signal from other devices itself and itself decide to operate as a WLAN access point in future, thus still contributing to WLAN data collection in the network 1000b. Periodically changing between detecting mode and access point mode is also possible, as well as changing said modes upon request of a further device, e.g. the base station 100 or another terminal.

As the terminal 10b is in the radio range of terminal 10c and its WLAN beacon signal r2d, the terminal 10b can detect the third terminal 10c and its WLAN beacon signal r2d and include information so obtained from the WLAN beacon signal r2d to the information forwarded to the base station 100 according to the embodiments. Thus, the base station 100 also becomes aware of the third terminal 10c in the sense of the secondary radio communications technology and may integrate the third terminal 10c and its related information into a neighborship graph.

Generally, the principle according to the embodiments proposes to use a secondary radio communications technology (e.g. WLAN) also integrated in many terminals 10a, 10b, 10c capable of using a primary radio communications technology such as LTE-A. Thus, neighborship information inter alia comprising relative distance between devices, radio channel characteristics between devices, attenuation of radio signals between devices, and the like may be determined in a decentralized manner, i.e. by the terminals, using said secondary radio communications technology thus preserving resources of the primary radio communications technology. After determination, this information may be forwarded to a base station 100, either by using the secondary radio communications technology or the primary radio communications technology or any combination thereof. The forwarded information may be aggregated at the base station 100 which advantageously enables to e.g. build a neighborship graph that helps to determine which of the terminals 10a, 10b, 10c are promising candidates for D2D communications, e.g. due to suitable radio channels, spatial proximity and the like.

According to an embodiment, it is particularly advantageous to exploit an existing beaconing procedure and the frequency resources of a widespread secondary radio communications technology such as WLAN, which requires few extra effort to attain the advantages of the embodiments.

According to a further embodiment, the cellular network or its base station 100, respectively, can control either devices 10a, 10b, 10c, 20, 30, 40 with WLAN capabilities, integrated WLAN transceivers 12a, 12b, 102a (e.g. Alcatel-Lucent LightRadio base stations equipped with WLAN) or private households and public WLAN hot spots and the like.

According to a further embodiment, each device capable of using the secondary radio communications technology listens to the WLAN beacons in its vicinity and feeds back, or forwards, respectively, related information like WLAN SSIDs and receive signal power levels via the primary radio communications technology or an access network enabled thereby to the base station 100.

According to a further embodiment, each device capable of using the secondary radio communications technology may also act as an access point or beacon signal transmitter in general. With respect to WLAN terminology, the device may operate as a WLAN access point, beaconing and thus broadcasting an ID (e.g., its WLAN SSID) which is known or may at least be determined by the base station 100.

For instance, a WLAN SSID used by a terminal 10a (Figure 1) or its WLAN interface 12a, respectively, for sending said beacon signal, may be known by the base station 100 a priori, because the base station 100 may have requested the terminal 10a to use a specific SSID, e.g. during a network initialization phase. According to a further embodiment, a terminal 10a may also set its WLAN interface's SSID on its own, i.e. independently of the base station 100, and may notify the base station 100 of the selected SSID, e.g. by means of control signaling via said primary radio communications technology.

Advantageously, any device which is in the radio range, e.g. WLAN range, of an access point or transmitter of a beacon signal according to the embodiments as explained above, may include its detection results and detected ID (SSID) into the information forwarded to the base station 100. This gives the base station 100 and the underlying radio network further possibilities to identify neighborhood relationships for devices outside fixed AP coverage.

According to a further embodiment, further devices which are outside of secondary network (i.e., WLAN) coverage can be identified by other methods, which may be used in addition to the method according to the embodiments. Such methods may comprise beaconing by using the primary radio communications technology. However, as most devices in urban environments will observe one or more WLAN access points and their beacon signal at any position, the need for excessive beaconing by using the primary radio communications technology is less likely.

According to the embodiments, the base station 100 can efficiently collect and aggregate neighborship information derived from usage of the secondary radio communications technology, i.e. the secondary wireless network such as WLAN. The neighborship information may e.g. be aggregated in the form of a weighted graph, where links between two nodes of the graph indicate the possibility of direct radio communication between said two devices represented by the nodes, and wherein said links may comprise one or more weighting factors derived from the secondary radio communications technology parameters as determined by the terminals or from the information forwarded by the terminals to the base station 100. For instance, a link weight parameter may indicate statistical properties of the so characterized radio channel and/or an attenuation and/or an estimated distance between the devices.

Generally, according to a further embodiment, devices or terminals which have good receive power conditions to an access point in the secondary network are likely to have useful channel qualities for D2D communication, as the radio frequencies are not completely different between e.g. LTE-A and IEEE 802.11n (and thus provide rather similar shadowing and path loss properties).

According to a further embodiment, the following steps are proposed:
- Either the base station 100 (i.e. the cellular network) decides to search for possible D2D-capable devices, e.g. for offload purposes,
- or the device, i.e. a terminal 10a, takes the initiative
- If the device, i.e. terminal 10a, decides to establish a D2D link it sends a request to the base station. Alternatively, the Network / base station 100 may take the initiative.
- The base station may pick in a local or remote database of registered users (terminals 10a, 10b, 10c) some candidates for D2D it wants to probe. The base station 100 then sends a corresponding request to the candidates, i.e. terminals, asking if they are able to perform the method according to the embodiments and whether they accept to enter in a "probing mode".
- The base station 100 then assigns SSIDs to be beaconed by WLAN Access Points (APs) 12a, 12b of the terminals 10a, 10b that previously accepted the request of the base station 100. Another possibility is that the base station 100 only assigns the terminals 10a, 10b to act as a WLAN AP, the AP then decides by itself which SSID to use and informs the base station 100 in a later stage.
- The terminals 10a, 10b then switch on their WLAN transmitters 12a, 12b and beacon their SSIDs. For example, Figure 1 represents a scenario where the terminal 10b may have been requested by the base station to act as a WLAN AP. Therefore, terminal 10b now acts as a WLAN AP A. The further terminal 10a (and possibly other terminals (not shown) in the WLAN range of the transmitter 12b) measure the received power from the beacon of terminal 10b and forward a quality indicator and/or other parameters related to the WLAN measurements to the base station 100.
- The base station 100 can then start to make a relationship table between terminals 10a, 10b (containing e.g. the estimated channel attenuation for each possible D2D connection), or to complete an already existing table.

According to a further embodiment, further benefit can be taken if the base station 100 has also WLAN capabilities, cf. e.g. Figure 3. This brings the following benefit: while selected terminals 10a, 10b are beaconing, the WLAN transceiver 102a in the base station 100 can support the estimation of channel conditions from the terminals 10a, 10b to the BS.

According to a further embodiment, in a specific operational scenario, one or more terminals 10a, 10b, 10c or other (WLAN) devices 30, 40 (Figure 3) may not transmit WLAN beacons. This might happen either for saving energy (i.e. none of the terminals needs to transmit beacons) or for security reasons; i.e. at the least at the generation of the neighborship relation the terminal is not exposing itself its location and SSID to all the devices with WLAN functionalities in the area. Another possibility is that - despite a WLAN transceiver - the devices lack the possibilities to act as a WLAN AP, being not supported by the device.

In this scenario, according to the present embodiment, these steps are followed: The base station 100 requests the terminals 10a, 10b, 10c (which currently do not send WLAN beacons) to at least listen to the available beacons of further WLAN devices in the region of the terminals 10a, 10b, 10c. This means the terminals 10a, 10b, 10c will "hear" the beacons of public and private WLAN transmitters. Additionally, if the base station 100 has an integrated WLAN transmitter 102a (Figure 3) it can also utilize that for sending a beacon. The terminals 10a, 10b, 10c then forward the SSIDs and the power level of the received signals and/or further results of their WLAN measurements to the base station 100. The base station then creates a neighborship graph or table based on the assumption that terminals 10a, 10b, 10c listening to similar SSIDs (of public and private WLANS around the terminals' location) in similar power levels are more likely to be close to each other. Thus, even if no or only few of the terminals 10a, 10b, 10c served by the base station 100 send WLAN beacons, by employing public and private WLAN transmitters, neighborship relations may be derived according to this embodiment.

It is also possible to combine any of the above explained embodiments with each other.

For example, according to a further embodiment, WLAN SSIDs of terminals 10c (Figure 4) sending a WLAN beacon according to an embodiment and WLAN SSIDs of other devices 30, 40 operating as WLAN access points at the surroundings are considered for measurement and/or parameter collection, also refer to the embodiment explained above with reference to Figure 4, where WLAN SSIDs of other devices 30, 40 as well as WLAN SSIDs of a terminal 10c may be considered for measurement, collection and determination of neighborship relations.

Advantageously, the principle according to the embodiments allows saving scarce spectral radio resources of the primary radio communications technology such as e.g. LTE or LTE-A by assigning the task of device/terminal neighbor detection and/or identification into a system operating on the basis of a secondary radio communications technology, i.e. other networks, preferably such networks which are using free unlicensed bands, like WLAN.

This will facilitate device to device (D2D) communication as a promising future technology greatly enhancing spectral efficiency. In other words, the efficient neighbor detection and/or identification enabled according to the embodiments is an ideal basis for D2D communications.

The description and drawings merely illustrate the principles of the invention. It will thus be appreciated that those skilled in the art will be able to devise various arrangements that, although not explicitly described or shown herein, embody the principles of the invention and are included within its spirit and scope.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of operating a terminal (10a) of a communications network (1000), wherein said terminal (10a) is served by a base station (100) of said communications network (1000) by means of a primary radio communications technology (r1), wherein said terminal (10a) is capable of using a secondary radio communications technology (r2), which is different from said primary radio communications technology (r1), wherein said terminal (10a) uses said secondary radio communications technology (r2) to determine (200) at least one parameter related to said secondary radio communications technology (r2), and wherein said terminal (10a) forwards (210) information depending on said parameter related to said secondary radio communications technology (r2) to said base station (100), preferably by using said primary radio communications technology (r1).

2. Method according to claim 1, wherein said communications network (1000) is a cellular communications network, wherein said primary radio communications technology (r1) is based on the LTE or LTE-Advanced or UMTS or GSM standard or based on another communications standard for cellular communications, and wherein said secondary radio communications standard (r2) is based on a standard of the IEEE-802.11 standard family.

3. Method according to one of the preceding claims, wherein said step of determining (200) said parameter comprises at least one of:
- detecting a presence of a further device (10b, 20) capable of communication via said secondary radio communications technology (r2),
- determining a quality and/or other parameters of a radio channel between said terminal (10a) and said further device (10b, 20),
- determining a receive signal power level of a signal received from said further device (10b, 20) by using said secondary radio communications technology (r2),
- determining a service set identifier, SSID, associated with said further device (10b, 20).

4. Method according to one of the preceding claims, wherein said terminal (10a) performs said steps of determining (200) and/or forwarding (210) a) upon request of a further device, particularly said base station (100), b) on its own initiative, c) periodically, d) if its interface for said primary radio communications technology (r1) is idle.

5. Method according to one of the preceding claims, wherein said terminal (10a) transmits, by using said secondary radio communications technology (r2), a beacon signal, wherein said beacon signal particularly comprises a network name and/or a service set identifier, SSID, and/or further information on said terminal (10a) and/or its communications capabilities provided via said secondary radio communications technology (r2).

6. Terminal (10a) of a communications network (1000), wherein said terminal (10a) is served by a base station (100) of said communications network (1000) by means of a primary radio communications technology (r1), wherein said terminal (10a) is capable of using a secondary radio communications technology (r2), which is different from said primary radio communications technology (r1), wherein said terminal (10a) is configured to use said secondary radio communications technology (r2) to determine (200) at least one parameter related to said secondary radio communications technology (r2), and wherein said terminal (10a) is configured to forward (210) information depending on said parameter related to said secondary radio communications technology (r2) to said base station (100), preferably by using said primary radio communications technology (r1).

7. Terminal (10a) according to claim 6, wherein said terminal (10a) is configured to perform the method according to one of the claims 1 to 5.

8. Method of operating a base station (100) of a communications network, wherein said base station (100) is configured to use a primary radio communications technology (r1) for serving at least one terminal (10a) of said communications network, preferably a terminal (10a) according to one of the claims 6 to 7, wherein said at least one terminal (10a) is capable of using a secondary radio communications technology (r2), which is different from said primary radio communications technology (r1), and wherein the base station (100) receives (260) information depending on at least one a parameter related to said secondary radio communications technology (r2) from said terminal (10a).

9. Method according to claim 8, wherein said base station (100) requests (250) said terminal (10a) to initiate a determination (200) of said at least one parameter related to said secondary radio communications technology (r2) and/or to initiate forwarding (210) information depending on said parameter related to said secondary radio communications technology (r2) to said base station (100).

10. Method according to one of the claims 8 to 9, wherein said base station (100) requests said terminal (10a) to transmit, by using said secondary radio communications technology (r2), a beacon signal, said beacon signal particularly comprising a network name and/or a service set identifier, SSID, and/or further information on said terminal (10a) and/or its communications capabilities provided via said secondary radio communications technology (r2).

11. Method according to claim 10, wherein said base station (100) assigns beaconing information to said terminal (10a) and notifies said terminal (10a) to transmit said beacon signal depending on said beaconing information.

12. Method according to one of the claims 8 to 11, wherein said base station (100) collects information depending on at least one a parameter related to said secondary radio communications technology (r2) from a plurality of terminals (10a, 10b, 10c).

13. Base station (100) of a communications network (1000, 1000a, 1000b), wherein said base station (100) is configured to use a primary radio communications technology (r1) for serving at least one terminal (10a) of said communications network, preferably a terminal (10a) according to one of the claims 6 to 7, wherein said at least one terminal (10a) is capable of using a secondary radio communications technology (r2), which is different from said primary radio communications technology (r1), and wherein the base station (100) is configured to receive information depending on at least one a parameter related to said secondary radio communications technology (r2) from said terminal (10a).

14. Base station (100) according to claim 13, wherein said base station (100) is configured to perform the method according to one of the claims 8 to 12.

15. Method of operating a communications network (1000) comprising a base station (100), preferably a base station (100) according to one of the claims 13 to 14, and at least one terminal (10a), preferably a terminal (10a) according to one of the claims 1 to 7, which is served by said base station (100) by means of a primary radio communications technology (r1), wherein said at least one terminal (10a) is capable of using a secondary radio communications technology (r2), which is different from said primary radio communications technology (r1), wherein said terminal (10a) uses said secondary radio communications technology (r2) to determine at least one parameter related to said secondary radio communications technology (r2) and wherein said terminal (10a) forwards information depending on said parameter related to said secondary radio communications technology (r2) to said base station (100), preferably by using said primary radio communications technology (r1), and wherein said base station (100) receives said forwarded information from said terminal (10a).

16. Communications network (1000) comprising a base station (100), preferably a base station (100) according to one of the claims 13 to 14, and at least one terminal (10a), preferably a terminal (10a) according to one of the claims 1 to 7, which is served by said base station (100) by means of a primary radio communications technology (r1), wherein said at least one terminal (10a) is capable of using a secondary radio communications technology (r2), which is different from said primary radio communications technology (r1), wherein said terminal (10a) is configured to use said secondary radio communications technology (r2) to determine at least one parameter related to said secondary radio communications technology (r2) and wherein said terminal (10a) is configured to forward information depending on said parameter related to said secondary radio communications technology (r2) to said base station (100), preferably by using said primary radio communications technology (r1), and wherein said base station (100) is configured to receive said forwarded information from said terminal (10a).
